# EUROPEAN PATENT APPLICATION

(11) **EP 4 216 018 A1**
(43) Date of publication of application: **26.07.2023**
(21) Application number: 23152009.9
(22) Date of filing: 17.01.2023
(51) Int. Cl.: G05F 1/66, H05B 3/86

(54) **APPARATUS FOR A MOTOR VEHICLE WITH HEATABLE WINDOWS AND METHOD FOR CONTROLLING THE APPARATUS**

(30) Priority: 19.01.2022 IT 202200000776
(71) Applicant: FERRARI S.p.A., 41100 Modena (IT)
(72) Inventor: DE FABIIS, Stefano, 41100 MODENA (IT)
(74) Representative: Studio Torta S.p.A.

(57) **Abstract**

An apparatus for a motor vehicle (1) includes a heatable windshield comprising an electrically conductive material,
an electric power source (4) electrically connected to the electrically conductive material, transducer means (6) configured to detect environmental quantities and state quantities of the heatable windshield and to generate signals relating to the detected quantities, a control unit (15) coupled to the transducer means (6) to acquire the signals, wherein the control unit (15) is configured to adjust a power supplied to the electrically conductive material by the power source (4) as a function of at least one of the acquired signals.

## Description

### CROSS-REFERENCE TO RELATED APPLICATIONS

This patent application claims priority from Italian patent application no. 102022000000776 filed on January 19, 2022, the entire disclosure of which is incorporated herein by reference.

### TECHNICAL FIELD

The invention relates to an apparatus for a motor vehicle provided with heatable windows, as well as a method for controlling the apparatus.

### PRIOR ART

As known, some motor vehicles on the market are provided with heatable windows.

Among heatable windows, the rear window is the most common, although, in some cases, the windshield or side windows may also consist of heatable windows.

A heatable window is a motor vehicle window comprising electrically conductive material with significant electrical resistance, so that the material can dissipate energy, in the form of heat, when an electric current passes through it.

This material may, for example, consist of electrical microfilaments or, more preferably, metals incorporated into the glass.

More specifically, some heatable windows are produced by overlapping multiple layers, at least one of which contains the electrically conductive material. For example, the layer in question is metallised, for example by dissolving metallic particles in a transparent glass compound.

Heatable windows, or, more precisely, the conductive materials within them, are connected to an electric power source, so as to be supplied by the source.

The typical functions of heatable windows are essentially two: defrosting and defogging the windows.

As needed, the heatable windows may be activated by the driver of the motor vehicle, using special commands, which can be operated by the driver to supply the windows with predetermined electrical power.

In general, the need is felt to obtain an improvement in the performance and functionality of the heatable windows, possibly so as to render pointless and, thus, dispensable, the presence of special vents designed to direct hot air flows directly towards the windows.

One purpose of the invention is that of meeting the need described above, preferably in a simple and energy-efficient way.

### DESCRIPTION OF THE INVENTION

The purpose is achieved with an apparatus for a motor vehicle and a method as defined in the independent claims.

The dependent claims define particular embodiments of the invention.

### BRIEF DESCRIPTION OF THE DRAWINGS

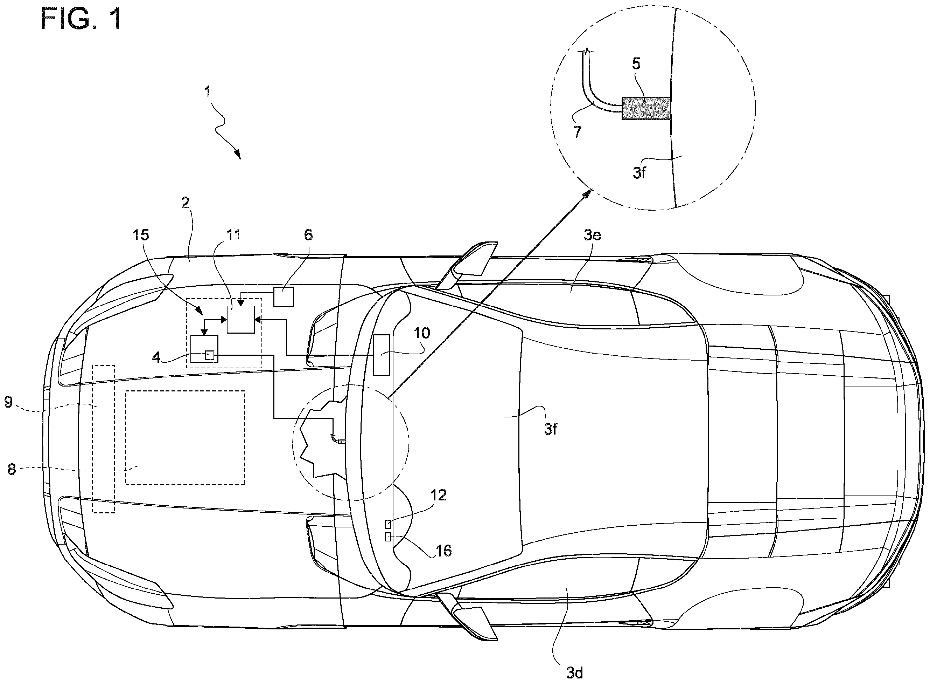

Below, one embodiment of the invention is described for a better understanding of the same by way of non-limiting example and with reference to the attached drawings, in which the sole Figure 1 is a plan view of a motor vehicle with parts removed for clarity and comprising an apparatus according to the invention.

### EMBODIMENTS OF THE INVENTION

In Figure 1, the reference number 1 is used to indicate, as a whole, a motor vehicle.

The motor vehicle 1 comprises a body 2 and multiple motor vehicle windows coupled to the body 2 and indicated in Figure 1 with the reference numbers 3d, 3e, 3f. The body 2 defines a passenger compartment of the motor vehicle 1 receiving a driver and one or more passengers. Below, the inside of the motor vehicle 1 will be understood to mean the passenger compartment defined by the body 2, while the outside of the motor vehicle will be defined by the environment outside the body 2.

The motor vehicle 1 also comprises an engine 8, a conditioning device 9 for conditioning the engine 8 by means of a conditioning fluid, in particular a cooling fluid for the engine 8, and an additional conditioning device 10 for conditioning the air inside the passenger compartment. The engine 8 and the devices 9, 10, are known and normally used in the field of motor vehicles, for which they will not be described in detail.

The motor vehicle 1 also comprises a control unit 11 configured to control the conditioning device 10, as well as a command device 12 that the driver can operate to set a desired temperature inside the passenger compartment. The control unit 11 is configured to extract information connected to the desired temperature by the command device 12 and to control the conditioning device 10 by setting the desired temperature as a set point.

As known, various control laws exist that may be applied by the control unit 11 based on the set point, for example open-ring or closed-ring control laws.

One of the motor vehicle windows, in particular the window 3f, more specifically defining a windshield, is a heatable window, i.e., a window that can be controlled to generate heat. In more detail, the window 3f can be controlled electrically; in other words, the heat is generated by means of dissipating electrical power supplied to the window 3f.

Thus, the window 3f comprises electrically conductive material such as, for example, electrical microfilaments or a metallised layer, as mentioned above in the description of the prior art.

In detail, the window 3f comprises multiple layers that include an intermediate metallised layer.

Everything indicated above with reference to the window 3f is not to be understood as limiting, since each of the windows 3d, 3e could also have comprised electrically conductive material and, thus, be heatable, alternatively or in addition to the window 3f.

The motor vehicle 1 also comprises an electric power source 4 electrically connected to the conductive material.

In particular, the motor vehicle 1 comprises a connector 5 that is electrically coupled to the electrically conductive material and an electric cable 7 that connects the source 4 to the connector 5.

The source 4 can be controlled or, in any case, is suitable for supplying the electrically conductive material with electrical power.

The power supplied to the electrically conductive material must at least in part be dissipated in the form of heat, so that the window 3f heats up. In this way, it is possible to defrost or defog the window 3f if layers of ice or condensate form on it, due to the thermodynamic conditions inside and/or the atmospheric conditions outside the motor vehicle 1.

In addition to the source 4, the motor vehicle 1 also comprises transducer means 6.

The means 6 are configured to detect one or more environmental quantities that indicate an atmospheric condition outside the motor vehicle and/or a thermodynamic condition inside the passenger compartment of the motor vehicle 1.

In addition, the means 6 are configured to detect one or more state quantities indicating a state of the window 3f.

In addition, the means 6 are also configured to generate one or more signals relating to the quantities detected.

In more detail, at least one of the environmental quantities indicates one of the following quantities: an ambient temperature, an ambient pressure, an ambient relative humidity, and a solar radiation intensity, in particular through the window 3f.

In particular, the ambient temperature may be the temperature of the outside of the motor vehicle 1 or the temperature of the passenger compartment. The environmental quantities detected by the means 6 preferably include both a quantity indicating the temperature outside the motor vehicle 1 and a quantity indicating the temperature of the passenger compartment.

This is similarly applied to the ambient pressure and to the ambient relative humidity, for which several environmental quantities may be detected by the means 6 with reference to the inside and outside of the motor vehicle 1. Therefore, the means 6 could detect quantities respectively indicating the pressure inside the motor vehicle 1, the pressure outside the motor vehicle 1, the humidity rate inside the motor vehicle 1, and the humidity rate outside the motor vehicle 1.

More precisely, the humidity rate is a relative humidity rate.

The means 6 may comprise multiple transducers respectively to detect the environmental quantities and generate the related signals, or a smaller number of transducers, of which each is configured to detect more than one of the environmental quantities and to generate one or more related signals. In fact, each signal could relate to just one environmental quantity detected or to several or even to all the environmental quantities detected. Of course, the means 6 can also comprise just one transducer to detect just one environmental quantity and generate a single related signal.

The individual transducers are known and are not, therefore, described in detail.

In general, here and below, the expression "quantity indicating" also includes the actual quantity indicated itself. For example, the quantity indicating the temperature inside the passenger compartment could be the temperature itself. This applies to all the quantities of this description. In addition, the term "indicating" is used with the meaning that the quantity or condition indicated can be described or observed, for example using calculations or estimates, by the indicative quantity.

One of the state quantities preferably indicates a quantity of condensation or of a presence of condensation on the glass 3f. In this case, the means 6 may comprise a specific transducer that includes a known fog sensor, for example an optical one, designed to detect the quantity of condensation on the window 3f. The specific transducer would, thus, be configured to detect the state quantity and to generate the related signal.

Alternatively, or in addition, in more detail, one of the state quantities indicates a temperature of the window 3f. In this case, the means 6 may comprise a specific temperature transducer configured to detect the state quantity and to generate the related signal.

Conveniently, the means 6 are also configured to detect other quantities, which are related to the quantities or conditions indicated by the environmental quantities and/or by the state quantities, and, therefore, useful to determine or estimate the same, together with the environmental quantities and/or the state quantities detected.

For example, the other quantities include a quantity indicating a temperature of the device 9 conditioning fluid. The latter temperature has an impact on the result of the control of the device 10 and, thus, on the actual environmental or thermodynamic condition inside the passenger compartment, for example represented by the actual temperature of the passenger compartment and/or the humidity rate of the passenger compartment. In fact, in the example in which the device 10 is controlled to heat the air of the passenger compartment, the desired temperature set by the driver may actually be reached when the engine 8 is warm, i.e., when the temperature of the conditioning fluid exceeds the desired temperature. Therefore, the actual thermodynamic condition inside the passenger compartment depends on the temperature of the conditioning fluid. Thus, the quantity indicating the latter temperature may be used to determine or estimate the actual thermodynamic condition inside the passenger compartment, in particular together with the desired temperature.

The desired temperature is not detected but is, in any case, information that is available to the control unit 11.

According to the invention, the motor vehicle 1 comprises a control unit 15 coupled to the means 6 to acquire the signals generated by it and configured to adjust the power supplied to the electrically conductive material by the source 4 depending on at least one of the signals acquired.

This means that the control unit 15 does not necessarily use all the signals relating to the quantities detected to adjust the supplied power.

Of course, the signals indicate the quantities detected and, thus, also the quantities or conditions indicated by the quantities detected.

The control unit 15, for example, may comprise the control unit 11. This does not necessarily mean that the control unit 11 is physically incorporated into the control unit 15. Instead, the control unit 15 may comprise additional control units spaced apart and spaced apart from the control unit 11. Rather, the control unit 15 can exchange information with the control unit 11 and can acquire information and signals that are processed and/or received by the control unit 11. In other words, the control unit 15 is coupled or connected to the control unit 11.

In particular, the control unit 11 can send a signal to the control unit 15, where the signal relates to the desired temperature that is set using the command device 12.

In addition, the source 4 can be part of the control unit 15. In other words, the control unit 15 may itself perform the function of an electric power source. This is clearly not limiting; the source 4 could be separate from the control unit 15 and comprise, for example, a battery or a condenser.

As far as regards the adjustment of the supplied power, for example, the latter is positively correlated to the humidity rate inside and/or outside the motor vehicle 1 indicated by the signals acquired.

In addition, the supplied power is, in detail, inversely correlated to the temperature inside and/or outside the motor vehicle 1 indicated by the signals acquired.

Furthermore, the supplied power is, in detail, inversely correlated to the temperature of the window 3f.

In addition, the supplied power is, in detail, inversely correlated to the solar radiation intensity.

Here, it should be noted that the signals acquired may also include that relating to the temperature of the conditioning fluid, acquired by the means 6, and that relating to the desired temperature, acquired by the control unit 11.

In fact, the signals acquired may enable the control unit 15 to estimate or determine the atmospheric condition outside the motor vehicle 1 and/or the thermodynamic condition inside the passenger compartment.

Thus, the control unit 15 adjusts the supplied power depending on the atmospheric condition and/or the thermodynamic condition estimated, for example as described above, here specifying, for greater clarity, that the atmospheric condition and/or the thermodynamic condition may be defined or indicated by the environmental quantities detected, or associated with the latter.

In particular, the control unit 15 is configured to process a functional relationship between input quantities, more specifically defined by the environmental quantities and by the state quantities detected, or comprising the environmental quantities and the state quantities themselves, and an output quantity corresponding to a reference power.

The reference power is enough, in particular just or precisely enough, or, more specifically, no greater than necessary, to defrost or defog the window 3f within a predetermined amount of time, in particular less than or equal to that established by the motor vehicle 1 compliance standards.

In other words, the reference power may also simply be that necessary to defrost or defog the window 3f precisely at the expiry of the predetermined amount of time, so as to avoid any type of power waste.

The period of time is not to be understood as an interval of indefinite time, but as a precise interval that is clearly determined and, for example, stored by the control unit 15.

Optionally, the period of time may be determined beforehand, for example as a function of other parameters or criteria for convenience, such as the time or current season, or set by the driver. The period of time may be stored and/or adjusted by the control unit 15.

The control unit 15 is configured to adjust the supplied power by setting the reference power with an adjustment target or a set point. One of the numerous control laws may be applied by the control unit 15, for example one of the open-ring or closed-ring control laws. Via each of the control laws, in particular, the supplied power comes close to the reference power. In other words, the difference between the supplied power and the reference power becomes negligible, i.e., lower than a negligibility threshold, or, even better, zero.

The input quantities may also comprise the other quantities detected by the means 6, as well as the desired temperature acquired by the control unit 11.

For example, the control unit 15 stores the functional relationship and processes it, applying it to the input quantities so as to calculate the output quantity.

The functional relationship to be loaded on the control unit 15 may be obtained using one or more steps, comprising an experimental calibration step, in which more sets of values of the input quantities are selected; each value set defines a corresponding experimental condition that is artificially created on a test stand. Thus, again in the experimental calibration step, a value of the output quantity is determined and recorded in association with each experimental condition, or each set of values, in which the value of the output quantity corresponds to the sufficient or just sufficient supplied power for defrosting or defogging the window 3f within the predetermined period of time or exactly at the expiry of the predetermined period of time.

In this way, as a result of the calibration step, you obtain a mapping between the input quantities and the output quantity. The mapping could define the functional relationship.

Otherwise, potentially, an additional step for obtaining the functional relationship may be a step in which an interpolation function is calculated. The interpolation function is designed to interpolate the mapping to obtain the output quantity as a function of sets of values of input quantities other than those selected during the calibration step.

Thus, the application of the interpolation function on the mapping could define the functional relationship.

According to another example, the control unit 15 processes the functional relationship in the sense that it associates the input quantities with the output quantity as the result of an optimisation, or, more specifically, of an optimal control problem, or, in particular, of a minimisation or maximisation, potentially bound, of a function of cost, for example based on a mathematical model of the motor vehicle 1. More precisely, the cost function is minimised and indicates a time for defrosting or defogging the window 3f. In particular, the minimisation of the cost function is constrained by safety constraints; an example of a safety constraint could be defined by setting a maximum limit for the temperature of the window 3f and/or for its temporal derivative.

In addition, as already mentioned above, the minimisation of the cost function is additionally constrained by the fact that the power obtained as a result of the optimisation must be sufficient to defrost or to defog the window 3f within the predetermined period of time. The mathematical model links the input quantities to the output quantity. The mathematical model may be stored in the control unit 15. The mathematical model may be obtained in various ways, for example via known identification techniques starting from experimental data, artificial intelligence techniques, including self-learning techniques, and the like, as well as via theoretical knowledge of the motor vehicle 1, alternatively or in addition.

According to another example, the functional relationship could be defined by the same mathematical model, so that the control unit 15 would process the functional relationship by applying the mathematical model to determine the output quantity by the input quantities.

In practice, the control unit 15 is configured to determine the reference power from the input quantities via the functional relationship, where the reference power is always enough or just enough to defrost or defog the window 3f within the predetermined period of time or at the precise expiry of the same, in the surrounding conditions defined by the input quantities.

The control unit 15 is preferably configured to reduce or eliminate the supplied power when the signals acquired by the means 6 indicate that the temperature of the window 3f exceeds a threshold, for example stored by the control unit and/or able to be set by the driver via a special command device (not illustrated) of the motor vehicle 1.

This essentially corresponds, in other words, to a splitting of the supplied power or even an actual switching off of the window 3f function, or a function for adjusting the temperature depending on the environmental quantities and the state quantities.

In addition, conveniently, the motor vehicle 1 comprises a command device 16 that can be operated by the driver to send a command signal to the control unit 15, which is configured to increase the supplied power in response to the command signal sent by the command device 16.

In reality, in this case, the control unit 15 increases the supplied power only if the latter is zero. In other words, the control unit 15 is configured to switch on the function of the window 3f in response to the command signal. In any case, nevertheless, variants may be considered in which the control unit 15 increases the supplied power even in other cases, where the supplied power is not zero. For example, the command device 16 could be suitable for setting a desired power increase; in this case, the signal sent would indicate the desired power increase. Here, the control unit 15 would increase the supplied power according to the desired power increase.

Alternatively, or in addition, the control unit 15 is configured to switch on the window 3f function, or to start to adjust the supplied power starting from the zero value, when the signals acquired indicate that one or more of the environmental quantities and/or one or more of the state quantities meet respective relations with corresponding thresholds, for example stored by the control unit and/or able to be set by the driver via a special command device (not illustrated) of the motor vehicle 1.

In light of what has been described above, the window 3f, the source 4, the means 6, and the control unit 15 are part of an apparatus for a motor vehicle 1, according to the invention.

The invention also relates to a method for controlling the apparatus for the motor vehicle 1.

The method comprises the steps of detecting the environmental quantities, detecting the state quantities, generating signals relating to the environmental quantities and the state quantities, and adjusting the supplied power to the electrically conductive material by the power source depending on at least one of the signals generated.

In general, each of the functions performed by the control unit 15 and by the means 6, as described above, may define, wholly or in part, preferred steps of the method.

From the above, the advantages of the apparatus and the method according to the invention are clear.

The window 3f can be defrosted or defogged effectively as a function of the actual environmental condition of the outside of the motor vehicle 1 and by the actual thermodynamic conditions of the passenger compartment. In fact, the power supplied to the electrically conductive material is no longer independent of the above-mentioned conditions but is accurately calibrated with gains in terms of efficiency and efficacy, based on the actual heating need for the window 3f.

In addition, the method and apparatus, according to the invention, make it possible to eliminate any vents configured to direct air towards the window 3f, in particular directly. Therefore, the motor vehicle 1, or more specifically, its dashboard or instrument panel, does not have such vents. Despite this, the motor vehicle 1 would in any case meet typical compliance requirements, in particular in part thanks to the configuration of the control unit 15.

Without the vents, the motor vehicle 1 is lightened and has reduced dimensions.

Finally, it is clear that changes may be made to the apparatus and the method according to the invention, and variations produced thereto, that, in any case, do not depart from the scope of protection defined by the claims.

## Claims

1. **-** An apparatus for a motor vehicle (1), the apparatus comprising:
- a heatable motor vehicle window (3f), in particular a heatable windshield, comprising an electrically conductive material,
- an electric power source (4) electrically connected to the electrically conductive material,
- transducer means (6) configured to
a) detect one or more environmental quantities indicative of an atmospheric condition on the outside of the motor vehicle (1) and/or of a thermodynamic condition on the inside of a passenger compartment of the motor vehicle (1),
b) detect one or more state quantities indicative of a state of the heatable motor vehicle window (3f), and
c) generate one or more signals relating to the detected environmental quantities and state quantities,
- a control unit (15) coupled to the transducer means (6) to acquire said signals,
wherein the control unit (15) is configured to adjust a power supplied to the electrically conductive material by the power source (4) as a function of at least one of the acquired signals.

2. **-** The motor vehicle according to claim 1, wherein at least one of the environmental quantities is indicative of a quantity among
- an ambient temperature,
- an ambient pressure,
- an ambient relative humidity,
- a solar radiation intensity.

3. **-** The apparatus according to claim 1 or 2, wherein at least one of the state quantities is indicative of a quantity of condensation or of a presence of condensation on the motor vehicle heatable glass (3f).

4. **-** The apparatus according to any one of the preceding claims, wherein at least one of the state quantities is indicative of a temperature of the heatable motor vehicle window (3f).

5. **-** The apparatus according to claim 4, wherein the control unit (15) is configured to reduce or cancel the supplied power when the acquired signals indicate that the temperature of the motor vehicle heatable glass (3) exceeds a threshold.

6. **-** The apparatus according to any one of the preceding claims, further comprising a command device (16) being operable by a driver of the motor vehicle to send a command signal to the control unit (15), whereby the control unit (15) is configured to increase the supplied power in response to the command signal sent by the command device (16).

7. **-** The apparatus according to any one of the preceding claims, wherein the control unit (15) is configured to start adjusting the supplied power starting from a zero value when the acquired signals indicate that one or more of the environmental quantities and/or one or more of the state quantities fulfil respective relationships with corresponding thresholds.

8. **-** The apparatus according to any one of the preceding claims, wherein the control unit (15) is configured to process a functional relationship between input quantities, comprising the environmental quantities and the state quantities, and an output quantity corresponding to a reference power, the reference power being sufficient to defrost or defog the motor vehicle heatable glass (3f) within a predetermined amount of time, whereby the control unit (15) is configured to adjust the supplied power by setting the reference power as an adjustment target.

9. **-** A motor vehicle (1) comprising the apparatus according to any one of the preceding claims.

10. **-A** method for controlling an apparatus according to any of the claims from 1 to 8 and comprising the steps of
- detecting the environmental quantities,
- detecting the state quantities,
- generating signals relating to the environmental quantities and the state quantities,
- adjusting the power supplied to the electrically conductive material by the power source (4) as a function of at least one of the generated signals.

11. **-**The method according to claim 10, wherein one of the state quantities is indicative of a temperature of the heatable motor vehicle window (3f), the method further comprising the step of reducing or cancelling the supplied power when the generated signals indicate that the temperature of the motor vehicle heatable glass (3f) exceeds a threshold.

12. **-**The method according to claim 10 or 11, wherein the step of adjusting the supplied power begins starting from a zero value of the supplied power when the generated signals indicate that one or more of the environmental quantities and/or one or more of the state quantities fulfil respective relationships with corresponding thresholds.

13. **-**The method according to any one of the claims from 10 to 12, further comprising the step of processing a functional relationship between input quantities, defined by the environmental quantities and by the state quantities, and an output quantity corresponding to a reference power, the reference power being sufficient to defrost or defog the motor vehicle heatable glass (3f) within a predetermined amount of time, whereby the step of adjusting the supplied power comprises setting the reference power as an adjustment target.
